# EUROPÄISCHE PATENTSCHRIFT

(11) **EP 3 146 324 B1**
(45) Veröffentlichungstag und Bekanntmachung des Hinweises auf die Patenterteilung: **21.10.2020**
(21) Anmeldenummer: 15726563.8
(22) Anmeldetag: 22.05.2015
(51) Int. Cl.: G01N 27/90

(54) **SENSORANORDNUNG ZUR WIRBELSTROMPRÜFUNG VON ELEKTRISCH LEITFÄHIGEN MESSOBJEKTEN**
SENSOR ARRANGEMENT FOR EDDY-CURRENT TESTING OF ELECTRICALLY CONDUCTIVE OBJECTS TO BE MEASURED
SYSTÈME DE DÉTECTION POUR LE CONTRÔLE PAR COURANTS DE FOUCAULT D'OBJETS À MESURER ÉLECTRIQUEMENT CONDUCTEURS

(30) Priorität: 22.05.2014 DE 102014107262
(43) Veröffentlichungstag der Anmeldung: 29.03.2017
(73) Patentinhaber: Sensitec GmbH, 35633 Lahnau (DE)
(72) Erfinder: PAUL, Johannes, 55128 Mainz (DE); GEBHARDT, Carola, 35614 Asslar (DE); RAUKOPF, Svenja, 35329 Gemünden Hainbach (DE); KREUTZBRUCK, Marc, 70569 Stuttgart (DE); NEUBAUER, Andreas, 80634 München (DE); PELKNER, Matthias, 10439 Berlin (DE)
(74) Vertreter: Spachmann, Holger
(86) Internationale Anmeldenummer: PCT/EP2015/061385
(87) Internationale Veröffentlichungsnummer: WO 2015/177341

(56) Entgegenhaltungen:
- US-A1- 2003 071 615
- US-A1- 2003 164 700
- US-A1- 2006 038 558

## Beschreibung

Die Erfindung betrifft eine Sensoranordnung zur Wirbelstromprüfung von elektrisch leitenden Messobjekten, die ein magnetoresistives Sensorelement und eine Magnetfelderzeugungseinrichtung zur Erzeugung eines magnetischen Wechselfelds umfasst.

### STAND DER TECHNIK

Ein Wirbelstromprüfverfahren ist eine zerstörungsfreie Werkstoffprüfung, die auf einer Anregung und Messung von Wirbelströmen mittels eines magnetischen Anregungsfeldes in einem elektrisch leitenden Messobjekt beruht. Ein Sensor misst die durch die Wirbelströme verursachten Magnetfelder, wobei Materialfehler, insbesondere an der Oberfläche oder in oberflächennahen Bereichen des Messobjektes, durch eine Veränderung der Wirbelströme, die durch Fehlstellen und Inhomogenitäten im Messobjekt verursacht werden, erkannt werden können.

In der Regel wird zur Erzeugung des Wechselmagnetfelds eine Magnetspule verwendet, durch die ein Wechselstrom fließt wird, um im zu untersuchendem elektrisch leitfähigen Material des Messobjektes wiederum Wechselströme zu induzieren. Hierzu ist bekannt, eine weitere Magnetspule als Sensor zu verwenden, in der die durch die Wirbelströme erzeugten Gegenmagnetfelder wiederum eine Spannung induzieren, die mittels einer Auswerteelektronik analysiert werden. Dabei werden Amplituden und Phasenverschiebung des induzierten Magnetfelds gegenüber dem Erregersignal ausgewertet.

Eine Wirbelstromprüfung wird insbesondere für eine Rissprüfung, für eine Messung von Materialinhomogenitäten, Schichtdicken oder von Materialeigenschaften, insbesondere Werkstoffzuständen wie Härtegrad oder Überprüfung einer Wärmebehandlung eines metallischen Messobjektes eingesetzt.

In aktuellen Wirbelstrommessgeräten werden als Messsensoren neben den bekannten Spulensystemen auch SQUID- oder GMR-Sensoren eingesetzt. SQUID-Sensoren basieren auf einem supraleitenden Ring, der durch ein normalleitendes oder elektrisch isolierendes Material unterbrochen ist, wobei die Unterbrechung so dünn ist, dass Elektronenpaare durch den Spalt hindurchdringen können. Bei Anwesenheit eines magnetischen Plus ändert sich der Widerstand durch die sogenannten Josephson-Kontakte. Im Falle von GMR-Sensoren (Giant Magneto-Resistance- Sensoren) werden abwechselnd magnetische und nichtmagnetische dünne Schichten mit nanometerdicken Schichtdicken angeordnet. Der elektrische Widerstand dieser Struktur hängt von der gegenseitigen Magnetisierung der magnetischen Schichten ab, wobei sich bei Anlegen eines externen Magnetfeldes der Widerstand ändert. SQUID- und GMR-Sensoren werden insbesondere bei geringen Magnetfeldstärken eingesetzt.

Aus dem Stand der Technik ist beim Einsatz von GMR-Sensoren bekannt, eine ringförmige Spule anzusetzen und den GMR-Sensor symmetrisch in einem gewissen Abstand vom axialen und geometrischen Mittelpunkt der Spule zu positionieren, um einen kreisförmigen oder punktförmigen Bereich untersuchen zu können. Die Sensoren sind somit dem Erregermagnetfeld ausgesetzt, das mithilfe einer aufwendigen Sensorelektronik herausgerechnet wird, um den Einfluss der in dem Messobjekt induzierten Wirbelströme, insbesondere bei Inhomogenitäten bestimmen zu können. Beim Scannen von großen Werkstoffbereichen werden eine Vielzahl von nebeneinanderliegenden ringförmigen Spulen und Sensoren eingesetzt, wobei die örtliche Auflösung relativ gering und die Messgenauigkeit herabgesetzt ist.

Aus der US 6 504 363 B ist beispielsweise eine Wirbelstromsensoranordnung bekannt, die einen GMR-Sensor einsetzt, der im Zentrum einer ringförmigen Spule höhenversetzt angeordnet ist, und einen punktförmigen Messbereich abscannen kann. Auch bei Fehlen eines Messobjektes oder bei homogenen Messobjekten, in denen keine Materialfehler vorhanden sind, werden abhängig von der Stärke des Messmagnetfeldes Signalwerte im Magnetfeldsensor angeregt, die über eine Sensorelektronik herausgerechnet werden müssen. Es können lediglich punktförmige Bereiche eines Messobjektes mit einer geringen Ortsauflösung untersucht werden.

Die US 2003/0071615 A1 und die US 2003/0164700 A1 betreffen praktisch identische Wirbelstromsensorvorrichtungen, nämlich zweidimensionale Messanordnungen zur Wirbelstromprüfung von elektrisch leitfähigen Messobjekten, wobei eine oder mehrere Primärspulen auf einer flächigen, ggf. gekrümmten Ebene angeordnet sind, und hierzu seitlich versetzt Messsensoren oder Pick-up-Spulen vorgesehen sind, die entweder auf der gleichen Ebene oder auf einer gegenüberliegenden Ebene eines PCBs angeordnet sein können. Diese Sensoranordnung dient zur zweidimensionalen Messung von Wirbelstrommustern, die durch die Primärspule flächenhaft in einer Oberfläche eines zu messenden Objekts induziert werden. Die in diesen Druckschriften vorgestellten Sensoranordnungen beruhten auf einer sogenannten Meandering-Winding-Magnetometer-Anordnung (MWM-Anordnung), wobei flächenhaft durch eine Primärspule eine zweidimensionale Stromverteilung mit einer räumlichen Wellenlänge λ in einen Oberflächenbereich eines Messobjekts induziert wird, und durch gegenüber der Primärspule versetzten Pick-up-Elementen bzw. Sensoren aufgenommen werden können. Daher ist eine flächige Anordnung von Primärspulen und zueinander seitlich versetzten Sekundärspulen bzw. MR-Sensoren vorgesehen.

Aufgabe der Erfindung ist es, eine Sensoranordnung vorzuschlagen, die einen breiten Messbereich eines Messobjektes mit hoher Geschwindigkeit und hoher Ortsauflösung scannen kann, wobei eine einfache Auswerteelektronik eine hochgenaue Detektion von Fehlstellen innerhalb des Messobjektes vornehmen kann.

Gelöst wird die obengenannte Aufgabe durch eine Sensoranordnung und einen Messkopf nach der Lehre der unabhängigen Ansprüche. Vorteilhafte Ausführungsformen der Erfindung sind Gegenstand der abhängigen Ansprüche.

### OFFENBARUNG DER ERFINDUNG

Erfindungsgemäß umfasst die Sensoranordnung zur Wirbelstromprüfung von elektrisch leitenden Messobjekten zumindest ein magnetoresistives Sensorelement und eine Magnetfelderzeugungseinrichtung zur Erzeugung eines magnetischen Wechselfelds. Es wird vorgeschlagen, dass die Magnetfelderzeugungseinrichtung zumindest ein Linienleiterelement umfasst, das bei Durchfluss eines Erregerstroms *I*ₑ das magnetische Wechselfeld als zylindrisches Wechselmagnetfeld entlang des Linienleiterelements erzeugt. Das zumindest eine Linienleiterelement ist bei bestimmungsgemäßen Gebrauch zwischen dem Sensorelement und einem Messobjekt angeordnet, wobei eine Sensorebene des Sensorelements radial zum Stromschwerpunkt des Linienleiterelements ausgerichtet ist.

Durch das Linienleiterelement, bildet sich erfindungsgemäß ein zylindrisches Magnetfeld entlang des Linienleiterelements aus, so dass die Sensoranordnung eine große Länge von einigen Zentimetern bis zu mehreren Zentimetern oder sogar im Meterbereich erfassen kann. Grundsätzlich sind keine Grenzen für die Scanbreite der Sensoranordnung gegeben, wobei das Linienleiterelement ein oder mehrere Anregungsleiter umfassen kann, die durch einen Stromdurchfluss mit einem Erregerstrom *I*ₑ ein zylinderförmiges Wechselmagnetfeld erzeugen können. Dabei weist das zumindest eine Sensorelement eine magnetfeldneutrale Achsrichtung auf, in der das Sensorelement unempfindlich für Magnetfelder ist. Liegt diese magnetfeldneutrale Achsrichtung tangential zu einem Radius des Stromleitungsschwerpunktes durch das Linienleiterelement, so detektiert das oder die lineare Reihe von Sensorelementen in einer homogenen Messumgebung das elektrische Wechselfeld, dass sich konzentrisch um den Stromleitungsschwerpunkt des einen Linienleiterelements oder einer Mehrzahl von Linienleiterelemente ausbildet, nicht. Hierdurch lässt sich ein großer Scanbereich der Sensoranordnung abdecken, und eine einfache Auswerteelektronik kann Magnetfelder, die aufgrund von Inhomogenitäten des Materials des Messobjektes erzeugt und nicht umfangssymmetrisch zum Linienleiterelement ausgerichtet sind, mit dem Magnetfeldsensor detektieren. Mit anderen Worten wird eine Sensoranordnung vorgeschlagen, die eine Magnetfelderzeugungseinrichtung, insbesondere einen stromdurchflossener Leiter, Spule oder Draht umfasst, mit dem ein magnetisches Wechselfeld erzeugt wird. Das Linienleiterelement ist im bestimmungsgemäßen Gebrauch zwischen Sensor-element und Messobjekt angeordnet, so dass durch die unmittelbare Nähe der Magnetfelderzeugungseinrichtung an der Oberfläche des Messobjektes ein starkes Induktionsmagnetfeld in das Messobjekt eindringen und dort Wirbelströme erzeugen kann. Hierdurch kann eine hohe Spannung im Messobjekt induziert und damit entsprechend starke Magnetfelder aufgrund von erzeugten Wirbelströmen als Rückwirkung vom Sensorelement erfasst werden. Aufgrund der gleichermaßen geringen räumlichen Abstände von Linienleiterelement und Sensorelement zum Messobjekt und bei einer hohen Sensitivität eines Sensorelements, insbesondere eines GMR-Sensorelements, kann das Sensorelement kleinste Fehler wie Risse oder Gefügefehler im Bereich von weniger als 100 µm detektieren. Durch die Anordnung des Linienleiterelements zwischen Messobjekt und Sensorelemente wird die Empfindlichkeit und Fehlerdetektionsrate der Sensoranordnung deutlich erhöht.

Grundsätzlich eignet sich eine Vielzahl von Magnetfeldsensoren für eine Anwendung in der Sensoranordnung. Neben bekannten Empfängerspulen eignen sich insbesondere AMR-, GMR- oder TMR-Sensorelemente, da diese in der Regel eine magnetfeldneutrale Achsrichtung orthogonal zur Ausdehnung der Chipoberfläche des Sensors aufweisen. Hierdurch ist bedingt, dass die Chipoberfläche symmetrisch zum Erregermagnetfeld steht, insbesondere bei einer Magnetfeldspule im Zentrum und auf der gleichen Ebene wie die Spulenwicklungen ausgerichtet ist. Bei einem Linienleiter als Magnetfelderzeugungseinrichtung ist die Chipoberfläche parallel zu und ist erfindungsgemäß auf einer Radialebene zur Schwerpunktslinie des Stromflusses durch den Linienleiter ausgerichtet. Der Schwerpunkt des Stromflusses durch einen Leiter entspricht einem linienförmigen Stromverlauf eines idealen und unendlich dünnen Stromfadens, der dasselbe Magnetfeld wie der verteilte Stromfluss durch den Querschnitt eines ausgedehnten Leiters aufweist.

Aufbauend auf dem vorherigen Ausführungsbeispiel kann es vorteilhaft, dass das Sensorelement ein GMR-Sensorelement ist, dessen GMR-Schichtstreifen parallel zum Linienleiterelement ausgerichtet sind. GMR-Sensorelemente haben die Eigenschaft, dass Magnetfeldkomponenten, die senkrecht zu den Schichtstreifen ausgerichtet sind, keine Sensorwertveränderung verursachen. Werden GMR-Sensorelemente verwendet, deren Schichtstreifen parallel zum Linienleiterelement ausgerichtet sind, so durchdringt ein Magnetfeld, das vom Linienleiterelement erzeugt wird, die GMR-Schichtstreifen senkrecht, so dass diese vom GMR-Sensorelement nicht erfasst werden können. GMR-Sensorelemente sind insbesondere für extrem kleine Magnetfeldkomponenten sensitiv, so dass eine hochgenaue Auflösung von Wirbelstrommagnetfeldern erfasst werden kann, die von Inhomogenitäten, Prüffehlern oder sonstigen Defekten eines Messobjektes herrühren.

Neben den vorgenannten GMR-Sensorelementen können vorteilhaft auch TMR-Sensorelemente eingesetzt werden. Dabei können mehrere TMR-Elemente sog. TMR-Junctions in einer Reihe auf einem Sensorelement angeordnet sein. Die sehr kleinen Dimensionen der TMR-Elemente ermöglichen eine sehr hohe Ortsauflösung. In einer vorteilhaften Weiterbildung kann das Sensorelement zumindest eine magnetfeldneutrale Achsrichtung aufweisen, wobei das Sensorelement für eine Magnetfeldkomponente in der magnetfeldneutralen Achsrichtung unempfindlich ist. Hierzu kann das Sensorelement relativ zur Magnetfelderzeugungsreinrichtung derart angeordnet sein, so dass in Luft oder in einem fehlerfreien Bereich eines Messobjektes ein Magnetfeld der Magnetfelderzeugungseinrichtung das Sensorelement nur in der magnetfeldneutralen Achsrichtung durchdringt. Somit ist das Sensorelement in mindestens einer magnetfeldneutralen Achsrichtung gegenüber externen Magnetfeldes unempfindlich. Ein Magnetfeldsensor, insbesondere ein GMR-, AMR- oder TMR-Sensorelement weist in der Regel zumindest eine oder zwei magnetfeldsensitive Achsen auf, und zumindest eine hierzu orthogonale magnetfeldneutrale Achse. In dieser Weiterentwicklung wird vorgeschlagen, dass die Sensoranordnung ein anisotrop messendes Magnetfeldsensorelement umfasst. Das Sensorelement kann derart räumlich zur Magnetfelderzeugungseinrichtung ausgerichtet sein, so dass die Anregungsmagnetfelder der Magnetfelderzeugungseinrichtung bei Anwendung in Luft oder an einem fehlerfreien Bereich eines Messobjektes, bei dem eine ungestörte und symmetrische Ausbreitung aller Magnetfelder gegeben ist, am Ort des Magnetfeldsensors diesen in der magnetfeldneutralen Achsrichtung durchdringen. Typischerweise ist bei einem in einer Ebene angeordneten Magnetfeldsensor, der eine oder mehrere magnetoresistive Strukturen aufweist, eine Achsrichtung innerhalb der Sensorebene und/oder orthogonal zur Chipebene magnetfeldunempfindlich, so dass der Sensor demgemäß symmetrisch zur Magnetfelderzeugungseinrichtung derart angeordnet werden kann, dass das Anregungsmagnetfeld an einer homogenen Messumgebung den Magnetfeldsensor in der magnetfeldneutralen Achsrichtung durchdringen. Somit wird, sofern keine Störungen durch Inhomogenitäten wie Risse, verdeckte Einschlüsse oder Gefügefehler in dem Messobjekt vorhanden sind, der Magnetfeldsensor nicht vom Anregungsmagnetfeld zur Erzeugung eines Sensorwerts angesprochen. Aus diesem Grund tritt im fehlerfreien Fall keine Rückwirkung des Erregermagnetfelds auf den Sensorwert auf, so dass ein Ausfiltern eines Sensorwerts, der von der Stärke eines Erregermagnetfelds abhängt, nicht notwendig wird. Dadurch ist eine Auswertung des Sensorsignals einfach, und es kann eine aufwändige Signalverarbeitung vermieden werden.

Vorteilhaft kann der Abstand zwischen dem Linienleiterelement und dem Sensorelement 10 µm bis 1.000 µm betragen. Insbesondere hat sich gezeigt, dass Abstände zwischen Linienleiterelement und Sensorelement von 50 µm bis 300 µm für eine hohe Sensitivität und eine große Messtiefe bezüglich einer Oberflächenprüfung eines Messobjektes vorteilhaft sind. Bei diesen Abständen können selbst bei geringen Strömen und einem geringen Energieverbrauch der Sensoranordnung hochgenaue Wirbelstromprüfungen durchgeführt werden.

In einer vorteilhaften Weiterbildung kann die relative Anordnung von Sensor-element und Magnetfelderzeugungseinrichtung zueinander einstellbar sein, insbesondere mittels mechanischer Stellelemente feinjustierbar sein. So kann die Winkelausrichtung und der Abstand von Sensorelement und Magnetfelderzeugungseinrichtung und der Abstand von Sensorelement und/oder Magnetfelderzeugungseinrichtung von einer Oberfläche eines Messobjektes durch mechanische Stellelemente feinjustiert werden. Durch die mechanischen Stellelemente können Asymmetrien ausgeglichen und beispielsweise bei verschiedenen Eindringtiefen oder Amplitudenwerten mechanische Abstände zwischen Sensorelement und Magnetfelderzeugungseinrichtung bzw. Oberfläche des Messobjektes eingestellt werden, um eine Nachjustierung und damit eine Verbesserung der Sensitivität der Sensoranordnung zu erreichen.

Es hat sich als vorteilhaft erwiesen, dass eine maximale Diagonale durch den Querschnitt eines Linienleiterelements 10 µm bis 1.000 µm beträgt. Beträgt der Durchmesser des Linienleiterelements 10 µm bis 1.000 µm, so handelt es sich um einen relativ dünnen Leiterdraht, der zum einen fertigungstechnisch sehr gut in einer Mikrostruktur integrierbar ist, zum anderen bei einem geringen Stromverbrauch ein relativ weitreichendes zylindrisches Magnetfeld erzeugen kann. Die vorgenannten Dimensionen eignen sich gut, um eine exakte Ausrichtung von Sensorchips von Magnetfeldsensoren in einer radialen Ebene des Linienleiterelements zu erreichen, wobei eine hohe Störunterdrückung von Magnetfeldlinien, die parasitäre Sensorwerten hervorrufen können, erreicht werden kann.

Grundsätzlich kann das Linienleiterelement eine beliebige Querschnittsform aufweisen. Vorteilhaft hat es sich herausgestellt, dass das Linienleiterelement einen rechteckigen oder elliptischen Querschnitt mit abweichenden Breiten besitzt, wobei die größere Breite dem Sensorelement zugewandt ist. Angesichts der Vorgabe, dass die magnetfeldneutrale Achsrichtung des Sensorelements tangential zum Schwerpunkt des Stromes durch das Linienleiterelement ausgerichtet ist, kann bei einem rechteckigen oder elliptischen Querschnitt, bei dem die größere Breite dem Sensorelement zugewandt ist, bei einer nicht exakten Ausrichtung des Chips auf einer radialen Ebene zum Schwerpunkt des Stromflusses durch das Linienleiterelement eine größere Toleranz von Fertigungsfehlern akzeptiert werden. Dies macht die Produktion derartiger Sensoranordnungen günstig und rationalisiert die Herstellung selbst bei schwankenden Produktionsgenauigkeiten. Dadurch, dass die Ebene des Sensorelements orthogonal gegenüber zu einer breiteren Seite des Linienleiterelements angeordnet ist, kann selbst bei gewissen Ausrichttoleranzen sichergestellt werden, dass das Messmagnetfeld rechtwinklig durch die Sensorebene des Magnetfeldsensors tritt.

Alternativ können anstelle eines Linienleiterelementes auch mehrere Linienleiterelemente parallel zueinander angeordnet sein, wobei die mehreren Linienleiterelemente elektrisch sowohl durch Parallelschaltung als auch in Reihenschaltung miteinander verbunden sein können. Hierdurch kann der konzentrische Verlauf des Magnetfeldes beeinflusst und die Magnetfeldstärke variiert werden.

Gemäß einer vorteilhaften Weiterbildung kann der Leiterstreifen und/oder das Sensorelement in einem Abdeckmaterial eingebettet, insbesondere von einem Kunststoffmaterial umspritzt sein, oder der Leiterstreifen kann in einer flexiblen Folie, insbesondere in einer Polyimidfolie umfasst sein. Damit die Sensoranordnung auch berührend über eine Oberfläche eines Messobjektes bewegt werden kann wobei aufgrund der mechanischen Reibung die Gefahr von Abrieb entsteht , kann zum mechanischen Schutz, zur Erhöhung der Lebensdauer und zur Verhinderung eines Kurzschlusses ein Abdeckmaterial den Leiterstreifen des Linienleiterelements umschließen, so dass dieses mechanisch geschützt ist. Das Abdeckmaterial kann insbesondere einen definierten Abstand zur Oberfläche des Messobjektes gewährleisten, und kann aus einem abriebfesten, nicht leitenden Material und paramagnetischen Material hergestellt sein. Alternativ kann, insbesondere um sehr geringe Abstände erzeugen zu können, der Leiterstreifen in einer hochfesten flexiblen Folie, insbesondere in einer Polyimidfolie, umfasst sein. Polyimidfolien werden zur Herstellung von flexiblen Anschlüssen bereits vielfältig in der Elektronik eingesetzt, wobei Leiterstrukturen unmittelbar auf die Folie gesintert oder aufgedruckt werden können. Durch die Umspritzung oder eine flexible Folie können verschiedenste Ausprägungen und Konturierungen einer Scanoberfläche der Sensoranordnung erreicht werden. Damit ist es insbesondere möglich die Scanoberfläche so geometrisch zu gestalten, dass sie der Oberflächenkontur des zu überprüfenden Messobjektes entspricht. So können durch eine angepasste Kontur der Sensoranordnung z.B. Rohre optimal mit gleichmäßigem Abstand zwischen Rohroberfläche und Sensoranordnung auf Fehler überprüft werden. Durch das zusätzliche Abdeckmaterial ist auch hier ein mechanischer Schutz der Sensoranordnung zu erreichen, eine hohe Sensitivität sicher zu stellen und eine hohe Lebensdauer zu gewährleisten.

In einer vorteilhaften Weiterbildung kann eine zweite Magnetfelderzeugungseinrichtung, die insbesondere ein zweites Linienleiterelement umfasst, zur Korrektur der Magnetfelderzeugung umfasst sein. Die zweite Magnetfelderzeugungseinrichtung kann relativ zum Sensorelement und zur ersten Magnetfelderzeugungseinrichtung derart angeordnet sein, dass ein von ihr hervorrufbares Korrekturmagnetfeld das Magnetfeld der ersten Magnetfelderzeugungseinrichtung am Ort des Sensorelements derart überlagert, dass das resultierende magnetische Wechselfeld in Luft oder in einem fehlerfreien Bereich eines Messobjektes das Sensorelement in der magnetfeldneutralen Achsrichtung durchdringt. In dieser Ausführungsform wird die Anordnung einer zweiten Magnetfelderzeugungseinrichtung vorgeschlagen, die bevorzugt ebenfalls ein Linienleiterelement umfasst oder eine ähnliche Struktur wie die erste Magnetfelderzeugungseinrichtung aufweist, und die relativ zur ersten Magnetfelderzeugungseinrichtung und zum Sensorelement derart angeordnet ist, dass sie das Magnetfeld der ersten Magnetfelderzeugungseinrichtung am Ort des Sensors dahingehend korrigiert, dass das resultierende Magnetfeld entlang der magnetfeldneutralen Achsrichtung das Sensorelement durchdringt. Diese zweite Magnetfelderzeugungseinrichtung dient als Korrekturmagnetfelderzeugungseinrichtung und kann eine aufgrund von Produktionsungenauigkeiten hervorgerufene Fehlstellung des Anregungsmagnetfelds der ersten Magnetfelderzeugungseinrichtung korrigieren. Somit lässt sich beispielsweise eine nicht radiale Ausrichtung einer Sensorebene gegenüber dem Stromschwerpunkt durch den Linienleiter der ersten Magnetfelderzeugung korrigieren, oder eine Höhenversetzung gegenüber einem geometrischen Schwerpunkt des ersten Linienleiterelements ausgleichen.

Ist eine zweite Korrekturmagnetfelderzeugungseinrichtung vorgesehen, so kann eine Magnetfeldkorrektureinheit umfasst sein, die eingerichtet ist, eine Stärke eines Korrekturstroms *I*_{c} durch die zweite Magnetfelderzeugungseinrichtung einzustellen, wobei die Magnetfeldkorrektureinheit des Weiteren eingerichtet ist, Frequenz und Phasenlage des Korrekturstroms *I*_{c} durch die zweite Magnetfelderzeugungseinrichtung zum Erregerstrom *I*ₑ durch die erste Magnetfelderzeugungseinrichtung zu synchronisieren, bevorzugt diese gleich zu wählen. Durch die Anordnung einer Magnetfeldkorrektureinheit kann individuell für jede Magnetfeldsensoranordnung ein anderer Korrekturstrom *I*_{c} gewählt werden, so dass insbesondere bei variierenden Ungenauigkeiten bei der Herstellung eine individuelle Anpassung oder Nachkorrektur durchführbar ist. Beispielsweise kann die Magnetfeldkorrektureinheit mittels eines einstellbaren Widerstands oder Potentiometers einen Korrekturstrom *I*_{c} einstellen, der als Parallelzweig zum Stromfluss des Anregungsstroms *I*ₑ geschaltet ist. Die Frequenz und die Phasenlage des Korrekturstroms *I*_{c} gegenüber dem Erregerstrom *I*ₑ kann grundsätzlich beliebig gewählt werden, wobei es sich als vorteilhaft erwiesen hat, diese synchron zu Frequenz und Phasenlage des Erregerstroms *I*ₑ zu wählen, bevorzugt diese gleich zu wählen. So kann in einem bevorzugten Ausführungsbeispiel der Korrekturstrom *I*_{c} parallel zum Erregerstrom *I*ₑ geschaltet werden, wobei die Stärke des Korrekturstroms *I*_{c} gegenüber dem Erregerstrom *I*ₑ einstellbar sein kann.

Dabei hat es sich als vorteilhaft herausgestellt, wenn in einer Kalibrierungsphase die Magnetfeldkorrektureinheit zum Einstellen eines Proportionalfaktors K des Korrekturstroms *I*_{c} zum Erregerstrom *I*ₑ mit *I_{c}*=*K·Iₑ* einen Einstellstrom durch die erste Magnetfelderzeugungseinrichtung unveränderlich proportional hierzu durch die zweite Magnetfelderzeugungseinrichtung vorgibt, und der Proportionalitätsfaktor *K* der Stromamplituden |*I*_{c}|, |*I*ₑ| derart gewählt wird, so dass ein Ausgangssignal einer Signalverarbeitungseinrichtung des Sensorelements ein gewünschtes Signal für eine Messung in Luft oder in einem fehlerfreien Bereich eines Messobjektes entspricht. So kann die Magnetfeldkorrektureinheit einen variablen Proportionalitätsfaktor *K* zwischen Erregerstrom *I*ₑ und Korrekturstrom *I*_{c} durch die erste und zweite Magnetfelderzeugungseinrichtung einstellen. Zur Kalibrierung der Sensoranordnung kann variierend der Proportionalitätsfaktor K eingestellt werden, bis das Ausgangssignal des Sensorelements einen gewünschten Wert liefert, insbesondere einen Wert, der unabhängig von Größe und Frequenz des Anregungsmagnetfelds ist. Hierdurch kann nachträglich oder bei konstruktiv bedingten Unsymmetrien zwischen Magnetfeldsensoreinrichtung und Magnetfelderzeugungseinrichtung eine Korrektur eingeführt werden und individuell für verschiedene Ausführungen einer Sensoranordnung ein Korrekturfaktor *K* eingestellt werden.

Vorteilhaft kann fertigungstechnisch das zumindest eine Sensorelement, insbesondere eine Reihe von zwei oder mehreren Sensorelementen auf einem PCB, insbesondere einer Kante einer Oberseite eines PCBs angeordnet sein, bei der bevorzugt die zweite Magnetfelderzeugungseinrichtung, insbesondere das zweite Linienleiterelement auf dem PCB angeordnet ist, wobei bevorzugt das zweite Linienleiterelement entlang einer Unterseite und parallel zur Kante des PCBs verläuft. In dieser Ausführungsform wird vorgeschlagen, dass ein oder eine Reihe von Sensorelementen auf einem PCB (Printed Circuit Board, Platine), insbesondere an einer Kante angeordnet ist. Die Kante dient dazu, in unmittelbarer Nähe einer Oberfläche eines Messobjektes geführt zu werden. Die Reihe von Sensorelementen ermöglicht eine große Scanbreite und eine hohe Ortsauflösung, so dass große Oberflächenbereiche des Messobjektes untersucht werden können. Durch Verwendung einer Mehrzahl von Sensorelementen kann eine hohe zweidimensionale Ortsauflösung erreicht und somit der Verlauf einer Fehlstelle genau erkannt werden. Die erste Magnetfelderzeugungseinrichtung kann beispielsweise ein Linienleiterelement sein, das zwischen dem Sensorelement oder der Reihe von Sensorelementen und der Oberfläche des Messobjektes parallel zur Kante des PCBs verläuft. Zur optionalen Anordnung der zweiten Magnetfelderzeugungseinrichtung wird vorgeschlagen, auf einer Unterseite des PCBs, auf dessen Oberseite die Sensoranordnung und das erste Linienleiterelement geführt ist, ein zweites Linienleiterelement anzuordnen, insbesondere auf dem PCB einen stromleitenden Bereich vorzusehen, der ein Korrekturmagnetfeld erzeugen kann, mit dem am Ort des Sensorelements das Erzeugermagnetfeld korrigiert wird, so dass es von der Sensoranordnung in einem störungsfreien Messumfeld, z.B. in Luft oder in Anwesenheit eines fehlerfreien Messobjektes nicht mehr wahrgenommen wird. Hierdurch wird eine konstruktive Anordnung vorgeschlagen, die prozesstechnisch sehr leicht herstellbar und mit geringen Kosten eine Justiermöglichkeit bietet.

Anschließend an das vorherige Ausführungsbeispiel können vorteilhafterweise mehrere Sensoranordnungen in einer geometrischen Form komplementär zur Oberfläche des Messobjektes, insbesondere konkav oder konvex gekrümmt oder in einem komplementären Krümmungsverlauf zu einer gekrümmten Oberfläche des Messobjektes entlang der Kante des PCBs angeordnet sein. So kann beispielsweise ein Umfangsbereich eines Rohres oder der vollständige Rohrumfang gleichzeitig entlang der Innen- oder Außenoberfläche durch einen Sensorvorrichtung, in der mehrere Sensoranordnungen auf einer formkomplementär gekrümmten Kante eines Sensorträgers gleichabständig angeordnet sind, abgescannt werden. Es ist denkbar, beliebige komplexe Oberflächen eines zu untersuchenden Messobjektes durch eine Kante einer eine Mehrzahl von Sensoreinrichtungen tragenden Messträgeranordnung formkomplementär nachzubilden. Mit einem derart geometrisch an eine Messobjekt-Oberflächenform angepassten Messkopf lassen sich komplex geformte Messobjekte mit hoher Genauigkeit und hoher Scanbreite und damit hoher Geschwindigkeit untersuchen.

Abschließend wird in einem nebengeordneten Aspekt ein Messkopf für eine zerstörungsfreie Materialprüfung vorgeschlagen, der eine Sensoranordnung nach einem der vorgenannten Ausführungsbeispiele trägt. Der Messkopf kann in einem Gehäuse gekapselt sein und ein PCB umfassen, auf den ein oder eine Reihe von Sensorelementen entlang einer Kante des PCBs angeordnet sind, wobei ein linienförmiger Draht als erste Magnetfelderzeugungseinrichtung parallel zur Kante zwischen einem oder mehreren Sensorelementen und einer Oberfläche eines Messobjektes geführt ist. Zur Kompensation und magnetfeldneutralen Ausrichtung des Erregermagnetfelds kann ein zweites linienförmiges Leiterelement auf einer Unterseite des PCBs angeordnet sein, um die Genauigkeit des Messkopfs zu erhöhen. Der Messkopf kann eine hohe Scanbreite aufweisen, um große Bereiche eines Messobjektes mit einer großen Ortsauflösung und hoher Sensitivität erfassen zu können, wodurch eine schnelle und kostengünstige Wirbelstromprüfung durchführbar ist. Die sensortragende Kante des Messkopfes kann formangepasst an eine Oberfläche eines Messobjektes gekrümmt, beispielsweise gebogen oder gewölbt sein.

### ZEICHNUNGEN

Weitere Vorteile ergeben sich aus der vorliegenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: schematisch in einer Draufsicht ein Ausführungsbeispiel einer erfindungsgemäßen Sensoranordnung und eine alternativen Sensoranordnung;
- **Fig. 2**: perspektivisch ein weiteres Ausführungsbeispiel einer Sensoranordnung auf einem PCB;
- **Fig. 3**: eine Querschnittsdarstellung eines weiteren Ausführungsbeispiels einer erfindungsgemäßen Sensoranordnung;
- **Fig. 4**: eine Querschnittsdarstellung eines weiteren Ausführungsbeispiels einer erfindungsgemäßen Sensoranordnung;
- **Fig. 5**: perspektivisch ein Ausführungsbeispiel eines Messkopfs nach der Erfindung;
- **Fig. 6**: perspektivisch ein weiteres Ausführungsbeispiel eines Sensorarray-Messkopfs nach der Erfindung;
- **Fig. 7**: eine perspektivische Darstellung eines Messkopfs mit Gehäuse nach der Erfindung;
- **Fig. 8**: eine Seitendarstellung und perspektivische Darstellung eines weiteren Ausführungsbeispiels einer Sensoranordnung auf einem PCB;
- **Fig. 9**: schematische Querschnittsdarstellung eines Ausführungsbeispiels einer Sensoranordnung mit Kompensationsmagnetfelderzeugungseinrichtung;
- **Fig. 10**: perspektivisch ein weiteres Ausführungsbeispiel einer Sensoranordnung mit Kompensationsmagnetfelderzeugungseinrichtung Messkopfs;
- **Fig. 11**: schematisch ein weiteres Ausführungsbeispiel eines Sensorarray-Messkopfs mit Auswerteelektronik nach der Erfindung.

In den Figuren sind gleichartige Elemente mit gleichen Bezugszeichen beziffert.

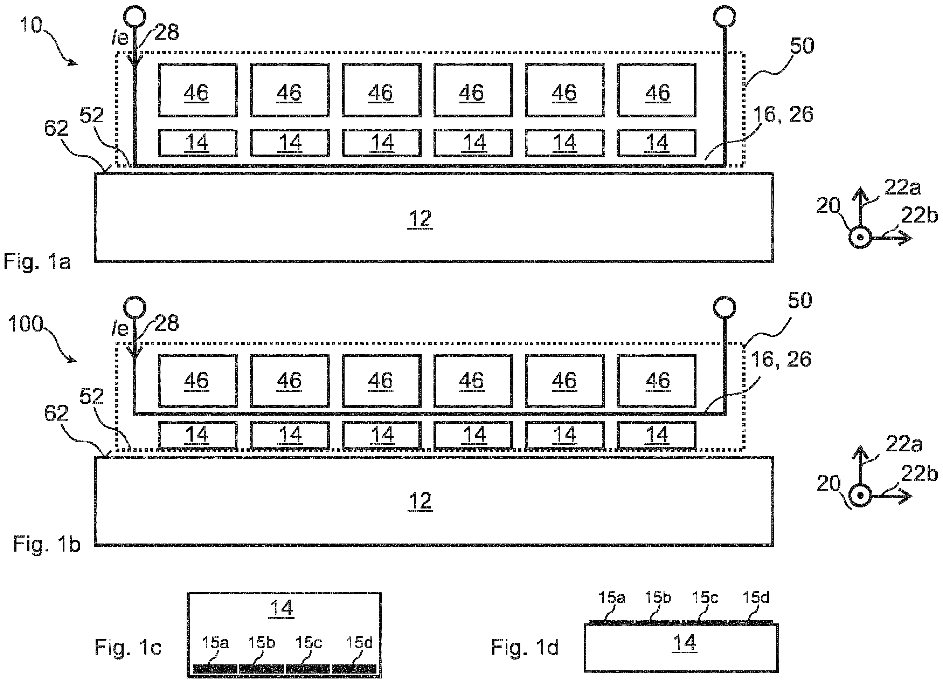

In der Fig. 1 ist ein erstes Ausführungsbeispiel einer erfindungsgemäßen Sensoranordnung 10 und in Fig. 1b eine alternative Sensoranordnung 100 schematisch dargestellt. In der Fig. 1a definiert ein dargestellte Koordinatensystem zwei magnetfeldsensitive Achsrichtungen 22a, 22b in der Blattebene, in der die gezeigten Sensorelemente 14 ein Magnetfeld wahrnehmen können. Die orthogonal zur Blattebene ausgerichtete Achskomponente 20 definiert eine magnetfeldneutrale Achsrichtung, in der ein Magnetfeld nicht von den Sensorelementen 14 detektiert werden kann. Bevorzugt sind die Sensorelemente 14 GMR-Sensorchips, die auf einem Substrat angeordnet sind und deren Schichtstreifen in Achsrichtung 22b parallel zu einem Linienleiter 26 ausgerichtet sind. Die Sensorelemente 14 des Messkopfs 10 sind auf dem PCB 50 angeordnet, wobei jedem Sensorelement 14 eine Signalverarbeitungseinrichtung 46 zugeordnet ist. Nicht dargestellt sind elektrischen Verbindungen zwischen der Signalverarbeitungseinrichtung 46 und den Sensorelementen 14. Durch Anordnung einer Reihe von Sensorelementen 14 entlang einer Kante 52 des PCBs 50 kann ein breiter Untersuchungsbereich eines Messobjektes 12 nach Materialfehlern gescannt werden. Das Messobjekt 12 ist aus einem elektrisch leitfähigen Material gefertigt, beispielsweise Stahl, Aluminium, Eisen, Titan, Nickel, Kobalt, eine Legierung davon, oder auch einem Verbundwerkstoff mit leitfähigen Bestandteilen.

Mittels einer Magnetfelderzeugungseinrichtung 16, die in Form eines Linienleiterelements 26 entlang der Kante 52 des PCBs geführt ist, so dass das Linienleiterelement 26 zwischen Sensorelementen 14 und des Messobjektes 12 verläuft, kann ein zylinderförmiges Magnetfeld erzeugt werden, das aufgrund des geringen Abstandes mit hoher Intensität auf die Oberfläche 62 des Messobjektes 12 wirkt. Aufgrund des symmetrischen Verlaufs der Magnetfeldlinien in einem ungestörten Bereich des Messobjektes 12 werden Magnetfelder von den Sensorelementen 14 nicht wahrgenommen. Eine Materialstörung beispielsweise ein Riss, ein Einschluss oder eine Öffnung in dem Messobjekt 12 , ruft zusätzliche induzierte Wirbelströme hervor, deren Magnetfeldkomponenten nicht symmetrisch zur Magnetfeldausrichtung 20 am Ort der Sensorelemente 14 gerichtet sind. Derartige, durch Materialfehler verursachten Störungsmagnetfelder, weisen Komponenten in die Achsrichtungen 22a und 22b auf, die von den Sensorelementen 14 erfasst werden können.

Die Signalverarbeitungseinrichtung 46 kann aufgrund der Widerstandsveränderung der magnetoresistiven Sensorelemente 14 ein Sensorsignal erzeugen, das an anderer Stelle auf dem PCB 50 verarbeitet, z.B. in ein analoges oder digitales Datensignal umgesetzt werden kann. Zur Erzeugung des zeitveränderlichen Anregungsmagnetfeldes wird durch die Magnetfelderzeugungseinrichtung 16 ein Erregerstrom *I*ₑ 28 geleitet.

Ausgehend von der Fig. 1a zeigt die Fig. 1b eine alternative Sensoranordnung 100, bei der das Linienleiterelement 26 der Magnetfelderzeugungseinrichtung 16 oberhalb der Sensorelemente 14 geführt ist. Das Linienleiterelement 26 verläuft somit zwischen Sensorelement 14 und Signalverarbeitungseinrichtung 46. Hierdurch können die Magnetfeldsensorelemente 14 unmittelbar entlang der Oberfläche 62 des Messobjektes 12 geführt werden, und die Magnetfelderzeugungseinrichtung 16 erzeugt Magnetfelder, die im unteren Bereich in Richtung des Messobjektes 12 sowohl durch die Sensorelemente 14 als auch durch das Messobjekt 12 dringen.

Durch das in Fig. 1a dargestellte Ausführungsbeispiel ergibt sich ein räumlicher Abstand zwischen Sensorelemente 14 und Oberfläche 62 des Messobjektes 12. Die in Fig. 1b dargestellte Variante 100 kann gewählt werden, wenn einer verbesserten Sensitivität durch geringen räumlichen Abstand zwischen Sensorelement 14 und Messobjekt-Oberfläche 62 im Gegensatz zu einer hohen Magnetflussdurchdringung der Messobjekt-Oberfläche 62 der Vorzug gegeben werden soll.

In Fig. 1c ist eine skizzenhafte Draufsicht auf ein Substrat eines Sensorelements 14 gezeigt, welches mehrere GMR-Schichtstreifen 15a bis 15d umfasst, die zueinander in Reihe entlang einer Kante des Substrats des Sensorelements 14 angeordnet sind. Die Schichtstreifen 15 sind elektrisch unabhängig voneinander kontaktiert und ermöglichen eine Ortslokalisierung des Magnetfeldes innerhalb des Sensorelements 14. In der Fig. 1d ist eine Seitenansicht des in Fig. 1c dargestellten Substrats des Sensorelementes 14 aus Fig. 1c dargestellt. Die mittels Dünnschichttechnik hergestellten Schichtstreifen 15a bis 15d sind auf dem Substrat, z.B. aus Silizium oder Glas aufgebracht und sind erheblich dünner als die Substratdicke. Die Anzahl der Schichtstreifen 15 kann von einer bis mehrere hundert Schichtstreifen 15 reichen und ermöglichen eine genaue Ortsauflösungsgenauigkeit entsprechend der Länge jedes einzelnen Schichtstreifens 15.

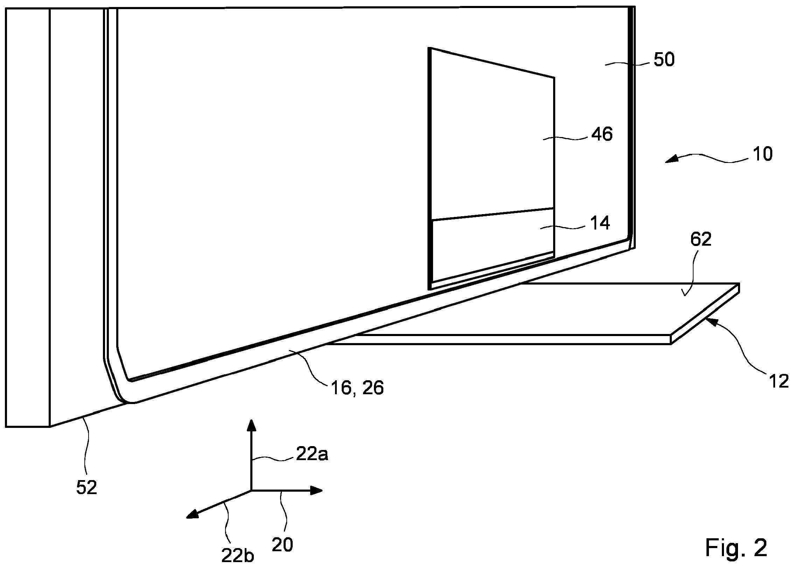

In der Fig. 2 ist in einer perspektivischen Darstellung eine Ausführungsvariante dargestellt, die grundsätzlich der in Fig. 1a dargestellten Ausführungsvariante ähnelt. Die Sensoranordnung 10 ist auf einem PBC 50 angeordnet, und umfasst ein Sensorelement 14 und eine zugeordnete Signalverarbeitungseinrichtung 46, welche z.B. als ASIC realisiert sein kann. Dabei ist in diesem Ausführungsbeispiel das Sensorelement 14 auf der Signalverarbeitungseinrichtung 46 montiert. Entlang einer Messkante 52 des PCBs 50 verläuft ein streifenförmiges Linienleiterelement 26 einer Magnetfelderzeugungseinrichtung 16. Das Linienleiterelement 26 kann aus mehreren parallelen und elektrisch isolierten Linienleiterelementen bestehen, und somit Teil einer Spule mit mehreren Windungen sein, so dass entweder ein hoher Strom oder eine Vielzahl von geringeren Strömen durch dünne Linienleiterelemente fließen kann, um das magnetische Erregerwechselfeld 18 zu erzeugen. Die Sensoranordnung 10 wird entlang einer Oberfläche 62 eines elektrisch leitfähigen Messobjektes 12 geführt, wobei es sich anbietet, diese in Achsrichtung 20 in Richtung der magnetfeldneutralen Ausrichtungskomponente des Sensorelements 14 zu führen. Magnetfelder, die in Richtung der magnetfeldsensitiven Achskomponenten 22a und 22b auftreten, können von der Sensoranordnung 14 detektiert werden. Der Abstand zwischen Sensorelement 14 und Oberfläche 62 des Messobjektes 12 bestimmt unter anderem die Auflösungsgrenze, mit der Fehler in dem Messobjekt 12 erkannt werden können. Die Feldstärke und Frequenz des Anregungswechselfeldes, das von dem Linienleiterelement 26 erzeugt wird, beeinflusst die Größe des Ausgangssignals der Sensorelemente 14 und ebenfalls die Eindringtiefe, bis zu der Fehler in dem Messobjekt 12 erkannt werden können. Diese Kenngrößen sind abhängig von der Festlegung des Anregungsstromes *I*ₑ 28.

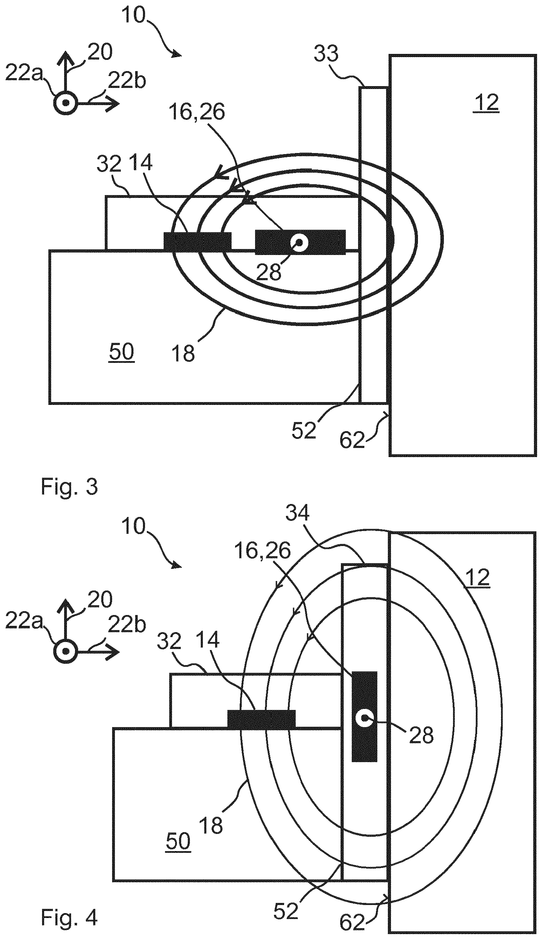

In der Fig. 3 ist in einer schematischen Queransicht eine Ausführungsform einer Sensoranordnung 10 dargestellt, wobei durch die konzentrischen Ellipsen der Feldlinienverlauf eines Anregungsmagnetfelds 18 angedeutet wird, das von der Magnetfelderzeugungseinrichtung 16 erzeugt wird. Die Sensoranordnung 10 umfasst einen PCB 50, auf dem ein Sensorelement 14 und ein Linienleiterelement 26 einer Magnetfelderzeugungseinrichtung 16 an einer PCB-Kante 52 angeordnet ist. Die PCB-Kante 52 ist mit einem Abdeckmaterial 33, beispielsweise einer Kunststoffkappe oder Kunststoffschicht, gegenüber einer Oberfläche 62 des Messobjektes 12 mechanisch geschützt. Das Abdeckmaterial 33 soll zum einen eine elektrische Kontaktierung mit der leitfähigen Oberfläche 62 des Messobjektes 12 verhindern, zum anderen die PCB-Kante 52 vor mechanischem Abrieb bei längerem Gebrauch der Sensoranordnung 10 schützen. Ein Erregerstrom *I*ₑ 28, der durch das Linienleiterelement 26 der Magnetfelderzeugungseinrichtung 16 fließt, erzeugt ein im Wesentlichen symmetrisches Wechselmagnetfeld 18, das in die Oberfläche 62 des Messobjektes 12 eindringt. Das Sensorelement 14 ist auf dem PCB 50 derart angeordnet, dass Magnetfeldlinien des Anregungsmagnetfelds 18 senkrecht auf der Oberfläche der Sensoranordnung 14 stehen, so dass diese in Achsrichtung 20 in eine magnetfeldneutrale Ausrichtung des Sensorelements 14 ausgerichtet sind, und das Magnetfeldsensorelement 14 kein Sensorsignal auf Basis des Anregungsmagnetfelds 18 liefert. Sensorelement 14 und Linienleiterelement 26 sind auf einem PCB 50 mittels einer Chip-On-Board-Verfahren (CoB-Technologie) angeordnet und in einem Kunststoffabdeckmaterial 32, beispielsweise einer Mold-Kunststoffschicht bzw. einem Glob-Top-Material gekapselt, wobei das Sensorelement 14 bis direkt an die Kante 52 des PCBs 50 herangeführt werden kann. Ist an der Oberfläche 62 oder in einem tieferen Bereich des Messobjektes 12 ein Material oder Gefügefehler vorhanden, so werden im Messobjekt 12 Wirbelströme erzeugt, die Magnetfeldkomponenten in die magnetfeldsensitive Achsrichtung 22a, 22b hervorrufen. Diese können vom Sensorelement 14 detektiert erkannt. Hierdurch ist eine einfache Detektion von Materialfehlern möglich. Durch die linienhafte Ausrichtung der Magnetfelderzeugungseinrichtung 16 kann eine Reihe (Linienarray) von Sensorelementen 14 entlang der PCB-Kante 52 angeordnet werden, um einen breiten Bereich der Oberfläche 62 des Messobjektes 12 abscannen zu können. Wesentlich an der Anordnung 10 ist, dass das Sensorelement 14 symmetrisch zum Schwerpunkt des Stromverlaufs 28 durch das Linienleiterelement 26 angeordnet ist. Prozesstechnisch stellt dies hohe Herausforderungen dar, da nur eine geringe geometrische Abweichung bereits Magnetfeldkomponenten des Anregungsmagnetfelds 18 am Ort des Sensorelements 14 verursacht, die nicht in die magnetfeldneutrale Achsrichtung 20, sondern in die magnetfeldsensitive Achsrichtung 22a oder 22b ausgerichtet sein können.

In der Fig. 4 ist ein gegenüber der Fig. 3 erweitertes Ausführungsbeispiel einer Sensoranordnung 10 dargestellt, die sich im Wesentlichen an der Konfiguration der Fig. 3 orientiert. Darüber hinaus ist das Linienleiterelement 26, das rechteckförmig aufgebaut ist und eine kürzere und eine längere Seite aufweist, derart im Verhältnis zum Sensorelement 14 ausgerichtet, dass die breite Seite des Linienleiterelements 26 dem Sensorelement 14 gegenübersteht. Somit kann selbst bei einer geringen Versetzung (Misalignment) von Linienleiterelement 26 zur Sensoranordnung 14 dennoch erreicht werden, dass die Magnetfeldkomponenten des Anregungsmagnetfelds 18 weitgehend in magnetfeldneutraler Achsrichtung 20 auf dem Sensorelement 14 ausgerichtet sind. Das Linienleiterelement 26 kann beispielsweise in einer flexiblen Folie 34, beispielsweise einer Polyimidfolie, eingebettet sein, die gleichsam die Sensoranordnung 10 elektrisch und mechanisch gegenüber der Oberfläche 26 des Messobjektes 12 isoliert und schützt.

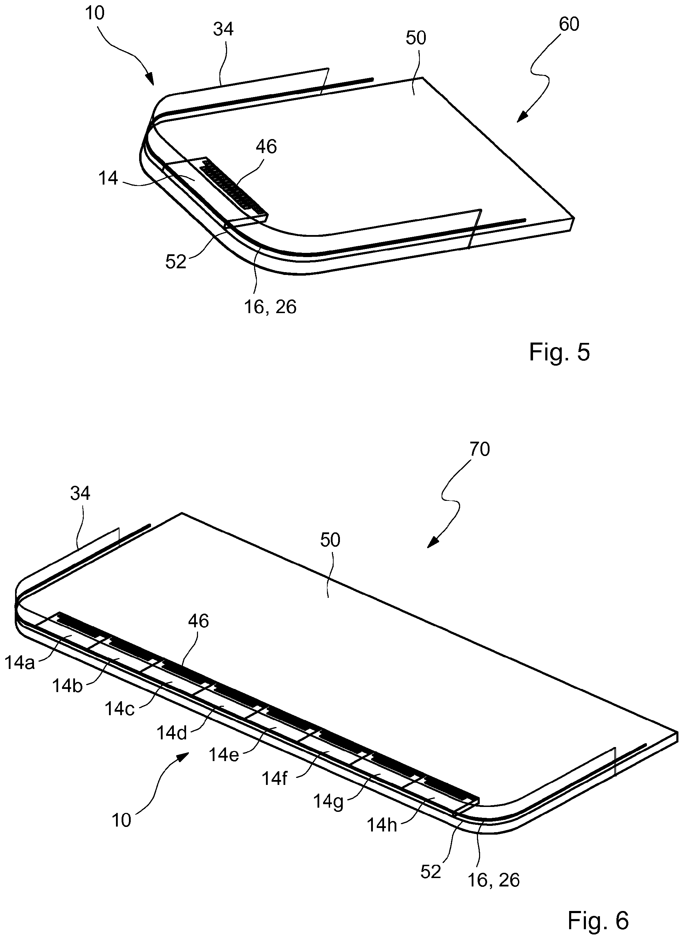

In den Fig. 5 und 6 sind perspektivisch verschiedene Ausführungsformen von Sensoranordnungen 10 dargestellt. In der Fig. 5 ist ein Messkopf 60 mit einem einzigen Sensorelement 14 dargestellt, wobei in Fig. 6 eine Array-Anordnung von 8 Sensorelementen 14 entlang einer PCB-Kante 52 dargestellt ist, so dass ein relativ großer Scanbereich von der Sensoranordnung 10 erfasst werden kann. Beiden Ausführungsformen gemeinsam ist, dass ein Sensorelement 14 mitsamt Signalverarbeitungseinrichtung 46 auf einem PCB 50 angeordnet ist.

Dabei ist das Sensorelement 14 und die Signalverarbeitungseinrichtung 46 auf einem gemeinsamen Trägerelement monolithisch integriert aufgebaut. Der zumindest eine GMR-Schichtstreifen 15 des Sensorelementes 14 ist räumlich in der unmittelbaren Nähe der PCB-Kante 52 angeordnet ist. Ein Linienleiterelement 26 einer Magnetfelderzeugungseinrichtung 16 ist in einer flexiblen Folie 34, insbesondere einer Polyimidfolie, entlang der PCB-Kante 52 aufgeklebt, und dient zur Erzeugung eines magnetischen Anregungswechselfelds 18. Sensoranordnung 14 und Signalverarbeitungseinrichtung 46 sind direkt auf dem PCB 50 mittels CoB-Technologie angeordnet und in einem Glob-Top Material gekapselt.

In der Fig. 6 ist ein Multi-Array-Sensormesskopf 70 perspektivisch gezeigt, wobei acht Sensorelemente 14a bis 14h mit Signalverarbeitungseinrichtungen 46 entlang einer ausgedehnten PCB-Kante 52 angeordnet sind. Die Anregung erfolgt durch ein Linienleiterelement 26, das in einer flexiblen Polyimidfolie 34 eingebettet ist, und das sowohl die PCB-Kante 52 gegenüber einer Oberfläche eines Messobjektes 12 schützt, wie auch die Oberfläche 62 des Messobjektes vor mechanischer Beschädigung durch den Messkopf 70 schützt. Des Weiteren dient die Polyimidfolie 34 als eine elektrische Isolierung und bewirkt eine Ausrichtung von Linienleiterelement 26 zum Sensorelement 14.

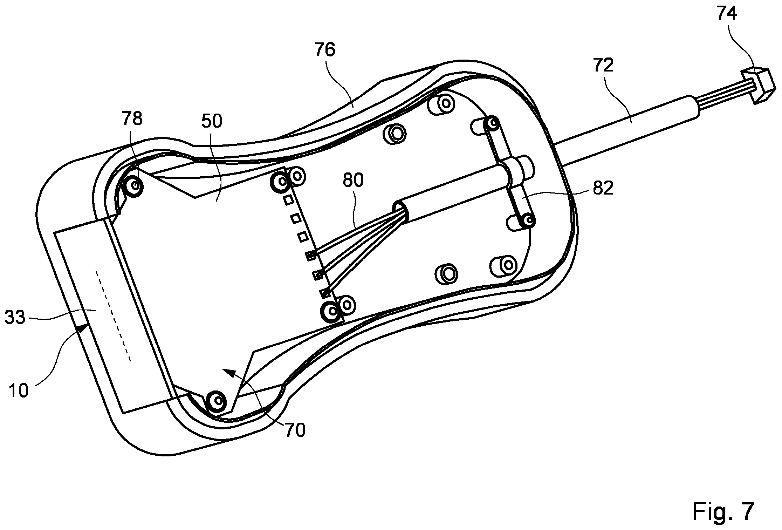

Die Fig. 7 stellt einen Messkopf 70 mit Sensorelementen-Array perspektivisch in einem Handführungsgehäuse 76 dar, wobei das Handführungsgehäuse 76 eine der Anatomie einer menschlichen Hand angepassten Gehäuseform aufweist, so dass der Messkopf 70 händisch über eine Oberfläche eines Messobjektes geführt werden kann. Der Messkopf 70 umfasst ein PCB 50, an dessen Kante 52 eine Reihe von Sensorelementen mit Signalverarbeitungseinrichtungen und eine Magnetfelderzeugungseinrichtung angeordnet sind. Die Sensoranordnung 10 ist durch eine dünnwandige Kunststoffkappe als Abdeckmaterial 33 geschützt und elektrisch isoliert, um über eine Oberfläche eines Messobjektes geführt werden zu können. Das PCB 50 ist im Inneren des Gehäuses 76 mittels Befestigungsschrauben 78 verschraubt. Am rückwärtigen Teil des PCBs 50 sind Anschlussleitungen 80 für die elektrische Stromversorgung und die Signalweitergabe kontaktiert, die über eine Anschlussleitung 72, die am Ende einen Anschlussstecker 74 zum Anschluss an eine nicht dargestellte Auswerteeinheit aufweist, verbunden werden kann. Die Anschlussleitung 72 ist durch eine mechanische Zugentlastung 82 am Gehäuse 76 gesichert.

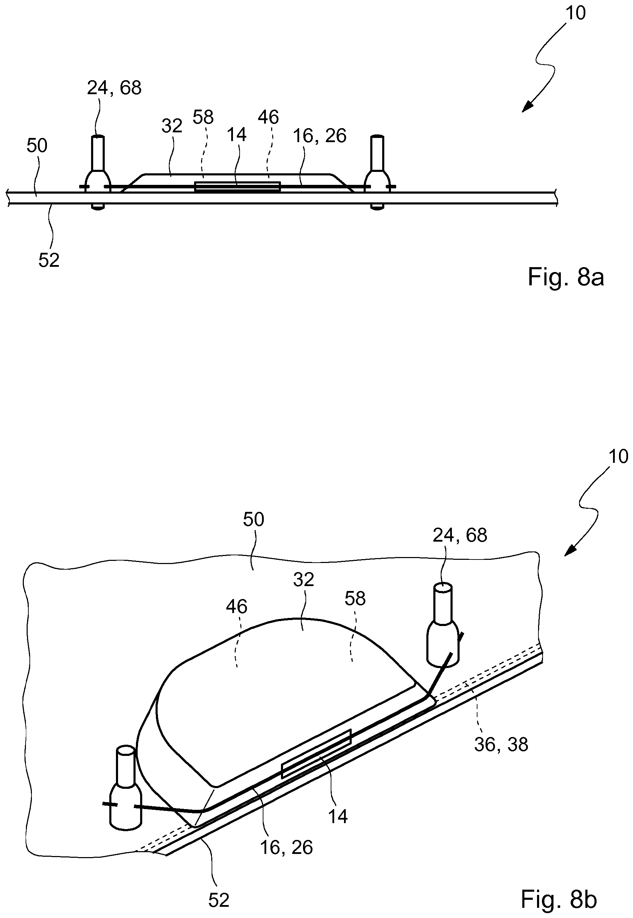

In den Figs. 8a und 8b sind in einer Seiten- und einer perspektivischen Darstellung eine weitere Ausführungsform einer Sensoranordnung 10 dargestellt. Die Sensoranordnung 10 ist entlang einer Kante 52 eines PCBs 50 angeordnet und umfasst ein Sensorelement 14 mit zugeordneter Signalverarbeitungseinrichtung 46, die in einem Abdeckmaterial 32, beispielsweise einer Kunststoffumspritzung bzw. einem Glob-Top-Material gekapselt sind. Hierbei ragt ein Fenster der Sensoranordnung 14 aus dem Abdeckmaterial heraus, um möglichst nah auf der Oberfläche eines Messobjektes Wirbelstrommagnetfelder messen zu können. Zur Anregung eines magnetischen Wechselfelds wird zwischen zwei Linienleiter-Befestigungspfosten 68 ein Linienleiterdraht 26 gespannt, der über das Fenster des Sensorelements 14 geführt ist. Durch ein Positioniermöglichkeit des Drahts 26 am Befestigungspfosten 68 ist eine mechanische Stelleinrichtung 24 gegeben, durch die eine relative Position von Linienleiterelement 26 zum Sensorelement 14 eingestellt und hierdurch in magnetfeldneutraler Achsrichtung des Anregungsmagnetfelds am Ort des Sensorelements 14 eingestellt werden kann. Die Sensorelektronik 58 ist in den Kunststoffabdeckmaterial 32 ebenfalls gekapselt. Eine zweite Magnetfelderzeugungseinrichtung 36 umfasst ein zweites Linienleiterelement 38 und ist, wie gestrichelt dargestellt, auf einer Unterseite der Platine 50 als PCB-Leitungsbahn ausgebildet. Das Linienleiterelement 38 kann durch Stromfluss eines Kompensationsstroms *I*_{c} 30, insbesondere durch Parallelschaltung mit der ersten Magnetfelderzeugungseinrichtung 16, ein Kompensationsfeld erzeugen, um das Anregungsmagnetfeld am Ort des Sensorelements 14 in eine magnetfeldneutrale Achsrichtung zu korrigieren. Hierzu ist es vorteilhaft, die zweite Magnetfelderzeugungseinrichtung 36 auf der Platine 50 anzuordnen, da diese lediglich eine Korrektur des Anregungsmagnetfelds 18 am Ort des Sensorelements 14 vorzunehmen braucht und ein lokal begrenztes Magnetfeld erzeugt, das sich unmittelbar in der Nähe der Sensorelemente 14 auswirkt.

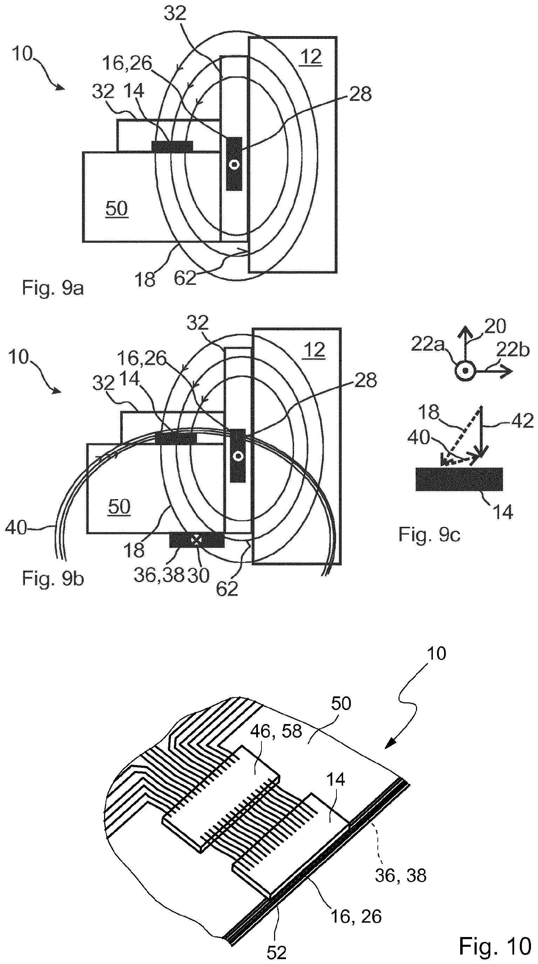

Bezugnehmend auf die Fig. 8 ist in den beiden Teilfiguren 9a, 9b und 9c der Fig. 9 die Problematik einer Fehlausrichtung von Linienleiterelement 26 zum Sensorelement 14 aufgezeigt. Hierzu zeigt die Fig. 9a eine aufgrund einer ungenauen Produktion hervorgerufene Ungenauigkeit bei der Positionierung eines Sensorelements14 gegenüber dem Schwerpunkt der Stromführung durch ein Linienleiterelement 26, das in einem Abdeckmaterial 32 gekapselt ist. Somit treten die elliptisch dargestellten Magnetfelder 18 der ersten Magnetfelderzeugungseinrichtung 16 nicht in die magnetfeldneutrale Achsrichtung 20 in das Sensorelement 14 ein.

Zur Korrektur kann, wie in Fig. 9b dargestellt, eine zweite Magnetfelderzeugungseinrichtung 36, die ein zweites Linienleiterelement 38 umfasst, beispielsweise auf der Unterseite des PCBs 50 angeordnet werden, das ein Korrekturmagnetfeld 40 erzeugen kann, wobei das Korrekturmagnetfeld 40 auf der Oberfläche des Sensorelements 14 eine Komponente erzeugt, die sich mit dem Erregermagnetfeld 18 zu einer resultierenden Komponente 42 ergibt, die exakt in eine magnetfeldneutrale Richtung 20 ausgerichtet ist. Der vektorielle Zusammenhang ist in Fig. 9c dargestellt. Somit kann auch bei lokalen Herstellungsfehlern oder Variationen der Ausrichtung von Sensorelement 14 zum Linienleiterelement 26 eine Korrektur vorgenommen werden. Zur Einstellung des Korrekturstroms *I*_{c} 30, der durch das zweite Linienleiterelement 38 fließt, bietet es sich an, die Magnetfelderzeugungseinrichtung 36 parallel zur ersten Magnetfelderzeugungseinrichtung 16 zu schalten. Lediglich die Amplitude des Stroms *I*_{c} 30 zur Amplitude des Anregungsstrom *I*ₑ 28 kann durch einen Korrekturfaktor K derart eingestellt werden, so dass eine wie in Fig. 9c dargestellte Kompensation erreicht werden kann. Es bietet sich hierzu an, den Korrekturstrom *I*_{c} 30 in Phase (ϕ=0°) oder gegensinnig (ϕ=180°) zum Anregungsstrom *I*ₑ 28 durch das zweite Linienleiterelement 38 fließen zu lassen.

In der Fig. 10 ist in einer weiteren perspektivischen Darstellung eine Sensoranordnung 10 dargestellt, die auf einem PCB 50 an einer PCB-Kante 52 angeordnet ist. Die Sensoranordnung 10 umfasst mehrere Magnetfeldsensoren 14 die auf einem gemeinsamen Chipträger angeordnet sind und eine Signalverarbeitungseinrichtung 46, die in einer Sensorelektronik 58 umfasst ist. Zwischen den Sensorelementen 14 und der Kante 52 des PCBs ist ein Linienleiterelement 26 einer Magnetfelderzeugungseinrichtung angeordnet und auf der Unterseite des PCBs 50 ist, nicht sichtbar, ein zweites Linienleiterelement 38 einer Korrekturmagnetfelderzeugungseinrichtung 36 angeordnet, um das Anregungsmagnetfeld 18 am Ort der Sensorelemente 14 korrigieren zu können.

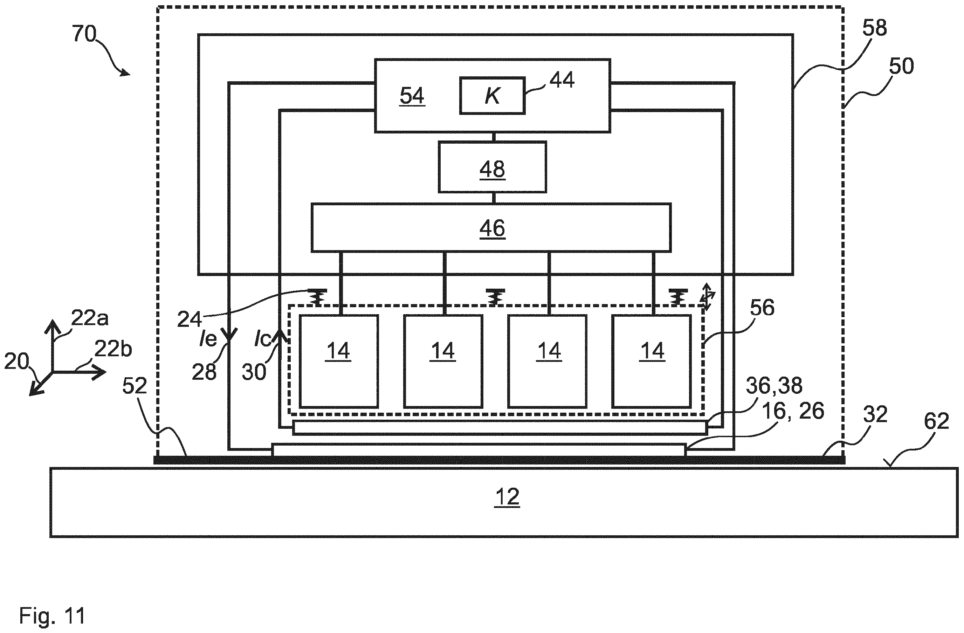

Schließlich zeigt Fig. 11 in einer schematischen Darstellung einen Multi-Array-Sensormesskopf 70. Der Multi-Array-Sensormesskopf 70 umfasst eine Sensoranordnung, die vier Sensorelemente 14 umfasst, die auf einem Chipsubstrat 56 angeordnet sind. Jedes Sensorelement 14 kann eine Mehrzahl Einzel kontaktierter magnetoresistiver Schichtstreifen zur Erhöhung der Ortsauflösung umfassen. Das Chipsubstrat 56 kann mittels mechanischer Stellelemente 24 in der relativen Lage gegenüber einer PCB-Kante 52 und einem Linienleiterelement 26 einer Magnetfelderzeugungseinrichtung 16 ausgerichtet werden. Alternativ können die Stellelemente 24 auch auf die Magnetfelderzeugungseinrichtung 16 wirken, um die Relativposition zwischen Linienleiterelement 26 und den Sensorelementen 14 geeignet einzustellen. Die Magnetfelderzeugungseinrichtung 16 dient dazu, ein magnetisches Anregungswechselfeld 18 zu erzeugen, das Wirbelströme in der Oberfläche 62 und der Tiefe des Messobjektes 12 anregen kann. Sind Fehler, Risse, Stufenversetzungen innerhalb des Messobjektes 12 vorhanden, so fließen induzierte Wirbelströme, die ihrerseits Magnetfelder erzeugen, die Komponenten in der magnetfeldempfindlichen Achsrichtung 22a, 22b der Sensorelemente 14 aufweisen und somit von den Sensorelementen 14 detektiert werden können. Die mechanischen Stellelemente 24 dienen dazu, die räumliche Lage der Sensorelemente 14 gegenüber dem Anregungsmagnetfeld 18 derart einzustellen, dass die Magnetfeldkomponenten des Anregungsmagnetfelds 18 am Ort der Sensorelemente 14 in eine magnetfeldneutrale Achsrichtung 20 ausgerichtet sind. Eine Korrekturmagnetfelderzeugungseinrichtung 36 umfasst ein zweites Linienleiterelement 38 und ist versetzt zum Linienleiterelement 26 der ersten Magnetfelderzeugungseinrichtung 16 ebenfalls auf dem PCB 50 angeordnet. Durch Parallelschaltung und Dämpfung eines Kompensationsstroms *I*_{c} 30 gegenüber dem Anregungsstrom *I*ₑ 28, der durch die erste Magnetfelderzeugungseinrichtung 16 fließt, kann eine Korrektur des Messmagnetfelds 18 am Ort der Sensorelemente 14 vorgenommen werden. Jedes Sensorelement 14 ist mit einer Signalverarbeitungseinrichtung 46 verbunden, die die Signale messen und verstärken kann, und diese einer Steuereinrichtung 48 zuführen kann. Die Steuereinrichtung 48 ist des Weiteren mit einer Magnetfeldsteuereinrichtung 54 verbunden, die eine Erzeugung des Anregungsstroms *I*ₑ 28 und des Korrekturstroms *I*_{c} 30 steuert. Das Amplitudenverhältnis von Anregungsstrom *I*ₑ 28 und Korrekturstrom *I*_{c} 30 wird über eine Magnetfeldkorrektureinheit 44 eingestellt, bei der durch einen Korrelationsfaktor *K* ein Verhältnis der Stärke des Anregungsmagnetfelds 18 zum Korrekturmagnetfeld 40 eingestellt werden kann. Die Steuereinrichtung 48, Signalverarbeitungseinrichtung 46 und Magnetfeldsteuereinrichtung 54 sind in einer Sensorelektronik 58 zusammengefasst, die ebenfalls auf dem PCB 50 angeordnet und beispielsweise in einer gemeinsamen Kunststoffabdeckmasse 32 umspritzt sein kann.

Das Linienleiterelement 26 der Magnetfeldsensoreinrichtung 16 kann beispielsweise aus Aluminium bestehen und kann rechteckförmig ausgerichtet sein mit einem Längen- und Breitenverhältnis von 4:1 bis 8:1, insbesondere 6:1. Beispielsweise kann die Länge 125 µm und die Breite 20 µm betragen. Der Abstand vom Linienleiterelement 26 zum Magnetfeldsensorelement kann beispielsweise 30 µm bis 40 µm betragen. Das Abdeckmaterial kann beispielsweise eine Dicke von mehr als 250 µm betragen und kann im Bereich des Messfensters eine Dicke von 150 µm bis 250 µm betragen. In besonderen Fällen kann das Abdeckmaterial bis zu einer Dicke von 100 µm betragen. Dabei kann das Linienleiterelement 26 in der Oberfläche des Abdeckmaterials eingegossen sein, so dass ein Abstand vom Magnetfeldsensorelement bis zur Oberfläche des Messobjektes 12 nur 100 µm oder weniger betragen kann. In der Regel ist der Strom *I*ₑ 28 durch die erste Magnetfelderzeugungseinrichtung 16 in einer Phasenlage von 0° oder 180° zum Strom *I*_{c} 36 durch die zweite Magnetfelderzeugungseinrichtung gerichtet, um das Korrekturmagnetfeld 40 zu erzeugen. Die Frequenz des Anregungsmagnetfeldes 18 kann veränderlich sein, um beispielsweise verschiedene Tiefenauflösungen bei zunehmendem Skin-Effekt erreichen zu können, was allerdings die Ortsauflösung beeinflusst.

### Bezugszeichenliste

- 10: Sensoranordnung
- 12: Messobjekt
- 14: Sensorelement
- 15: GMR-Schichtstreifen
- 16: Magnetfelderzeugungseinrichtung
- 18: Magnetfeld / magnetisches Wechselfeld
- 20: magnetfeldneutrale Achsrichtung
- 22: magnetfeldsensitive Achsrichtung
- 24: mechanisches Stellelement
- 26: Linienleiterelement
- 28: Erregerstrom *I*ₑ
- 30: Korrekturstrom *I*_{c}
- 32: Abdeckmaterial
- 33: Abdeckmaterial
- 34: flexible Folie
- 36: zweite Magnetfelderzeugungseinrichtung
- 38: zweites Linienleiterelement
- 40: Korrekturmagnetfeld
- 42: resultierendes Magnetfeld
- 44: Magnetfeldkorrektureinheit
- 46: Signalverarbeitungseinrichtung
- 48: Steuereinrichtung
- 50: PCB
- 52: PCB-Messkante
- 54: Magnetfeldsteuereinrichtung
- 56: Chipsubstrat
- 58: Sensorelektronik
- 60: Messkopf
- 62: Oberfläche der Messstruktur
- 64:
- 66:
- 68: Linienleiter-Befestigungspfosten
- 70: Messkopf mit Sensorelementen-Array
- 72: Anschlussleitung
- 74: Anschlussstecker
- 76: Handführungsgehäuse
- 78: Befestigungsschraube
- 80: Anschlussleitung
- 82: Zugentlastung
- 100: Alternative Sensoranordnung

## Patentansprüche

1. Sensoranordnung (10) zur Wirbelstromprüfung von elektrisch leitenden Messobjekten (12), umfassend zumindest ein magnetoresistives Sensorelement (14) und eine Magnetfelderzeugungseinrichtung (16) zur Erzeugung eines magnetischen Wechselfeldes, **gekennzeichnet dadurch, dass** die Magnetfelderzeugungsreinrichtung (16) zumindest ein Linienleiterelement (26) umfasst, das bei Durchfluss eines Erregerstroms *I*ₑ (28) das magnetische Wechselfeld (18) als zylindrisches Wechselmagnetfeld entlang des Linienleiterelements (26) erzeugt und dass das Linienleiterelement (26) bei bestimmungsgemäßen Gebrauch zwischen dem Sensorelement (14) und einem Messobjekt (12) angeordnet ist, wobei eine Sensorebene des Sensorelements (14) radial zum Stromschwerpunkt des Linienleiterelements (26) ausgerichtet ist.

2. Sensoranordnung (10) nach Anspruch 1, **dadurch gekennzeichnet, dass** das Sensorelement (14) ein AMR-Sensorelement, ein GMR-Sensorelement oder ein TMR-Sensorelement ist.

3. Sensoranordnung (10) nach Anspruch 2, **dadurch gekennzeichnet, dass** das Sensorelement (14) ein GMR-Sensorelement ist, dessen GMR-Schichtstreifen (15) parallel zu dem zumindest einen Linienleiterelement (26) ausgerichtet sind.

4. Sensoranordnung (10) nach Anspruch 2, **dadurch gekennzeichnet, dass** das Sensorelement (14) ein TMR-Sensorelement ist, welches mehrere TMR-Elemente umfasst, die in einer Linie parallel zu dem zumindest einen Linienleiterelement (26) ausgerichtet sind.

5. Sensoranordnung (10) nach einem der Ansprüche 2 bis 4 **dadurch gekennzeichnet, dass** das Sensorelement (14) für eine Magnetfeldkomponente in einer magnetfeldneutralen Achsrichtung (20) unempfindlich ist, und dass das Sensorelement (14) relativ zur Magnetfelderzeugungsreinrichtung (16) derart angeordnet ist, so dass in Luft oder in einem fehlerfreien Bereich eines Messobjektes (12) ein Magnetfeld (18) der Magnetfelderzeugungseinrichtung (16) das Sensorelement (14) nur in der magnetfeldneutralen Achsrichtung (20) durchdringt.

6. Sensoranordnung (10) nach einem der vorangegangenen Ansprüche, **dadurch gekennzeichnet, dass** ein Abstand zwischen Linienleiterelement (26) und Sensorelement (14) 10 bis 1000 µm beträgt.

7. Sensoranordnung (10) nach einem der vorangegangenen Ansprüche, **dadurch gekennzeichnet, dass** die relative Anordnung von Sensorelement (14) und Magnetfelderzeugungseinrichtung (16) zueinander einstellbar ist, insbesondere mittels mechanischen Stellelementen (24) feinjustierbar ist.

8. Sensoranordnung (10) nach einem der vorhergehenden Ansprüche, **dadurch gekennzeichnet, dass** eine maximale Diagonale durch den Querschnitt des Linienleiterelements (26) maximal 10 bis 1000 µm beträgt.

9. Sensoranordnung (10) nach Anspruch 8, **dadurch gekennzeichnet, dass** das Linienleiterelement (26) einen rechteckigen oder elliptischen Querschnitt mit abweichenden Breiten besitzt, wobei die größere Breite dem Sensorelement (14) zugewandt ist.

10. Sensoranordnung (10) nach einem der vorhergehenden Ansprüche, **dadurch gekennzeichnet, dass** das Linienleiterelement (26) in einem Abdeckmaterial (32) eingebettet, insbesondere von einem Kunststoffmaterial umspritzt ist, oder dass der Leiterstreifen in einer flexiblen Folie (34), insbesondere in einer Polyimidfolie, umfasst ist.

11. Sensoranordnung (10) nach einem der vorhergehenden Ansprüche, **dadurch gekennzeichnet, dass** eine zweite Magnetfelderzeugungseinrichtung (36), insbesondere mit einem zweiten Linienleiterelement (38), zur Korrekturmagnetfelderzeugung umfasst ist, die relativ zum Sensorelement (14) und zur ersten Magnetfelderzeugungseinrichtung (16) derart angeordnet ist, dass ein von ihr hervorrufbares Korrekturmagnetfeld (40) das Magnetfeld (18) der ersten Magnetfelderzeugungseinrichtung (16) am Ort des Sensorelements (14) derart überlagert, dass das resultierende magnetische Wechselfeld (42) in Luft oder in einem fehlerfreien Bereich eines Messobjektes (12) das Sensorelement (14) nur in der magnetfeldneutralen Achsrichtung (20) durchdringt.

12. Sensoranordnung (10) nach Anspruch 11, **dadurch gekennzeichnet, dass** eine Magnetfeldkorrektureinheit (44) umfasst ist, die eingerichtet ist, eine Stärke eines Korrekturstroms *I*_{c} (30) durch die zweite Magnetfelderzeugungseinrichtung (36) einzustellen, wobei die Magnetfeldkorrektureinheit (44) des Weiteren eingerichtet ist, Frequenz und Phasenlage des Korrekturstroms *I*_{c} (30) durch die zweite Magnetfelderzeugungseinrichtung (36) zum Erregerstrom *I*ₑ (28) durch die erste Magnetfelderzeugungseinrichtung (16) zu synchronisieren, bevorzugt die Phasenlage 0° oder 180° zu wählen.

13. Sensoranordnung (10) nach Anspruch 12, **dadurch gekennzeichnet, dass** die Magnetfeldkorrektureinheit (44) zur Einstellung eines Proportionalfaktors *K* des Korrekturstroms *I*_{c} (30) zum Erregerstrom *I*ₑ (28) mit *I*_{c}=*K·I*ₑ einen Einstellstrom durch die erste Magnetfelderzeugungseinrichtung (16) und veränderlich proportional hierzu durch den zweiten Magnetfelderzeugungseinrichtung (36) vorgibt, und der Proportionalfaktor *K* der Stromamplituden |*I*_{c}|, |*I*ₑ| gewählt wird, bei dem ein Ausgangssignal einer Signalverarbeitungseinrichtung (46) des Sensorelements (14) einem gewünschten Signal für eine Messung in Luft oder in einem fehlerfreien Bereich eines Messobjektes (12) entspricht.

14. Sensoranordnung (10) nach einem der vorangegangenen Ansprüche, **dadurch gekennzeichnet, dass** das zumindest eine Sensorelement (14), insbesondere eine Reihe von zwei oder mehreren Sensorelemente auf einem PCB (50), insbesondere an einer Kante (52) einer Oberseite eines PCBs (50), angeordnet ist.

15. Sensorvorrichtung nach Anspruch 14, **dadurch gekennzeichnet, dass** mehrere Sensorelemente (14) in einer geometrischen Form komplementär zur Oberfläche (62) des Messobjektes (12), insbesondere konkav oder konvex gewölbt oder in einem komplementären Krümmungsverlauf zu einer gekrümmten Oberfläche (62) des Messobjektes (12) an der Kante (52) des PCBs (50) angeordnet sind.

16. Messkopf (60, 70) für eine zerstörungsfreie Materialprüfung, **dadurch gekennzeichnet, dass** der Messkopf (60, 70) eine Sensoranordnung (10) nach einem der vorgenannten Ansprüche umfasst.

## Claims

1. Sensor arrangement (10) for eddy-current testing of electrically conducting measured objects (12), comprising at least one magnetoresistive sensor element (14) and a magnetic field generating device (16) for generating an alternating magnetic field, **characterized in that** the magnetic field generating device (16) comprises at least one line conductor element (26) which when flowed though by an excitation current *I*ₑ (28) generates the alternating magnetic field (18) as a cylindrical alternating magnetic field along the line conductor element (26), and that the line conductor element (26) is, when used for the intended purpose, arranged between the sensor element (14) and a measured object (12), a sensor plane of the sensor element (14) being aligned radially with the current flow centre of mass through the line conductor element (26).

2. Sensor arrangement (10) according to claim 1, **characterized in that** the sensor element (14) is an AMR sensor element, a GMR sensor element or a TMR sensor element.

3. Sensor arrangement (10) according to claim 2, **characterized in that** the sensor element (14) is a GMR sensor element whose GMR layer strips (15) are aligned parallel to the at least one line conductor element (26).

4. Sensor arrangement (10) according to claim 2, **characterized in that** the sensor element (14) is a TMR sensor element which comprises several TMR elements which are aligned in a line parallel to the at least one line conductor element (26).

5. Sensor arrangement (10) according to one of claims 2 to 4, **characterized in that** the sensor element (14) is insensitive for a magnetic field component in a magnetic-field-neutral axial direction (20), and that the sensor element (14) is arranged relative to the magnetic field generating device (16) such that in air or in a defect-free area of a measured object (12) a magnetic field (18) of the magnetic field generating device (16) penetrates the sensor element (14) only in the magnetic-field-neutral axial direction (20).

6. Sensor arrangement (10) according to one of the preceding claims, **characterized in that** a distance between line conductor element (26) and sensor element (14) is 10 to 1000 µm.

7. Sensor arrangement (10) according to one of the preceding claims, **characterized in that** the relative arrangement of the sensor element (14) and the magnetic field generating device (16) to one another is settable, in particular is finely adjustable by means of mechanical setting elements (24).

8. Sensor arrangement (10) according to one of the preceding claims, **characterized in that** a maximum diagonal line through the cross-section of the line conductor element (26) is a maximum of 10 to 1000 µm.

9. Sensor arrangement (10) according to claim 8, **characterized in that** the line conductor element (26) has a rectangular or elliptical cross-section with differing widths, the greater width facing the sensor element (14).

10. Sensor arrangement (10) according to one of the preceding claims, **characterized in that** the line conductor element (26) is embedded in a covering material (32), in particular is covered in a plastic material by extrusion, or that the conductor strip is enclosed in a flexible film (34), in particular in a polyimide film.

11. Sensor arrangement (10) according to one of the preceding claims, **characterized in that** a second magnetic field generating device (36), in particular with a second line conductor element (38), for corrective magnetic field generation is comprised, which is arranged relative to the sensor element (14) and to the first magnetic field generating device (16) such that a corrective magnetic field (40) creatable thereby overlays the magnetic field (18) of the first magnetic field generating device (16) at the location of the sensor element (14) such that the resultant alternating magnetic field (42) in air or in a defect-free area of a measured object (12) penetrates the sensor element (14) only in the magnetic-field-neutral axial direction (20).

12. Sensor arrangement (10) according to claim 11, **characterized in that** a magnetic field correction unit (44) is comprised which is configured to set an intensity of a corrective current *I*_{c} (30) through the second magnetic field generating device (36), the magnetic field correction unit (44) furthermore being configured to synchronize frequency and phase position of the corrective current *I*_{c} (30) through the second magnetic field generating device (36) with the excitation current *I*ₑ (28) through the first magnetic field generating device (16), preferably to select the phase position 0° or 180°.

13. Sensor arrangement (10) according to claim 12, **characterized in that** the magnetic field correction unit (44) predefines with *I*_{c}=*K*·*Iₑ,* for setting of a proportional factor *K* of the corrective current *I*_{c} (30) relative to the excitation current *I*ₑ (28), a setting current through the first magnetic field generating device (16) and variably proportional thereto through the second magnetic field generating device (36), and the proportional factor *K* of the current amplitudes |*I*_{c}|, |*I*ₑ| is selected at which an output signal of a signal processing device (46) of the sensor element (14) corresponds to a required signal for a measurement in air or in a defect-free area of a measured object (12).

14. Sensor arrangement (10) according to one of the preceding claims, **characterized in that** the at least one sensor element (14), in particular a row of two or more sensor elements on a PCB (50), is arranged in particular on an edge (52) of an upper side of a PCB (50).

15. Sensor device according to claim 14, **characterized in that** several sensor elements (14) are arranged in a geometrical form complementary to the surface (62) of the measured object (12), in particular in a concave or convex curve or in a complementary curved course relative to a curved surface (62) of the measured object (12) on the edge (52) of the PCB (50).

16. Measuring head (60, 70) for non-destructive material testing, **characterized in that** the measuring head (60, 70) comprises a sensor arrangement (10) according to one of the aforementioned claims.

## Revendications

1. Dispositif capteur (10) destiné au contrôle par courants de Foucault d'objets à mesurer, conducteurs d'électricité (12), comprenant au moins un élément capteur (14) magnétorésistif et un dispositif générateur de champ magnétique (16) destiné à générer un champ magnétique alternatif, **caractérisé en ce que** le dispositif générateur de champ magnétique (16) comprend au moins un conducteur de ligne (26) qui, lors du passage d'un courant d'excitation *I*ₑ (28), génère le champ magnétique alternatif (18) sous forme de champ magnétique alternatif cylindrique le long du conducteur de ligne et que le conducteur de ligne (26) est disposé, en cas d'usage conforme, entre l'élément capteur (14) et un objet à mesurer (12), sachant qu'un plan capteur de l'élément capteur (14) est positionné radialement au centre de masse du courant du conducteur de ligne (26).

2. Dispositif capteur (10) selon la revendication 1, **caractérisé en ce que** l'élément capteur (14) est un capteur AMR, un capteur GMR ou un capteur TMR.

3. Dispositif capteur (10) selon la revendication 2, **caractérisé en ce que** l'élément capteur (14) est un capteur GMR dont les couches GMR (15) sont orientées parallèlement audit au moins un conducteur de ligne (26)

4. Dispositif capteur (10) selon la revendication 2, **caractérisé en ce que** l'élément capteur (14) est un capteur TMR qui comprend plusieurs éléments TMR qui sont orientés alignés parallèlement audit au moins un conducteur de ligne (26)

5. Dispositif capteur (10) selon une des revendications 2 à 4, **caractérisé en ce que** l'élément capteur (14) est insensible à une composante du champ magnétique dans un sens axial (20) insensible au champ magnétique, et que l'élément capteur (14) est disposé de telle sorte par rapport au dispositif générateur de champ magnétique (16) que dans l'air ou dans une zone sans défaut d'un objet à mesurer (12), un champ magnétique (18) du dispositif générateur de champ magnétique (16) traverse l'élément capteur (14) uniquement dans le sens axial insensible au champ magnétique (20).

6. Dispositif capteur (10) selon une des revendications précédentes, **caractérisé en ce qu'**un écart entre le conducteur de ligne (26) et l'élément capteur (14) est compris entre 10 et 1 000 µm.

7. Dispositif capteur (10) selon une des revendications précédentes, **caractérisé en ce que** la disposition relative de l'élément capteur (14) et du dispositif générateur de champ magnétique (16) l'un par rapport à l'autre est réglable, est notamment ajustable avec précision au moyen d'actionneurs mécaniques (24).

8. Dispositif capteur (10) selon une des revendications précédentes, **caractérisé en ce qu'**une diagonale maximale traversant la section du conducteur de ligne (26) est comprise au maximum entre 10 et 1 000 µm.

9. Dispositif capteur (10) selon la revendication 8, **caractérisé en ce que** le conducteur de ligne (26) possède une section rectangulaire ou elliptique avec des largeurs divergentes, sachant que la largeur supérieure est tournée vers l'élément capteur (14).

10. Dispositif capteur (10) selon une des revendications précédentes, **caractérisé en ce que** le conducteur de ligne (26) est noyé dans un matériau de recouvrement (32), notamment couvert par extrusion d'un matériau plastique, ou que la bande conductrice est comprise dans un film flexible (34), notamment dans un film de polyimide.

11. Dispositif capteur (10) selon une des revendications précédentes, **caractérisé en ce qu'**est compris un second dispositif générateur de champ magnétique (36), notamment avec un second conducteur de ligne (38), pour la génération du champ magnétique de correction et est disposé de telle sorte par rapport à l'élément capteur (14) et au premier dispositif générateur de champ magnétique (16) qu'un champ magnétique de correction (40) produisible par celui-ci se superpose au champ magnétique (18) du premier dispositif générateur de champ magnétique (16) en lieu et place de l'élément capteur (14) de sorte que le champ magnétique alternatif résultant (42) traverse, dans l'air ou dans une zone sans défaut d'un objet à mesurer (12) l'élément capteur (14) uniquement dans le sens axial insensible au champ magnétique (20).

12. Dispositif capteur (10) selon la revendication 11, **caractérisé en ce qu'**est comprise une unité de correction de champ magnétique (44) qui est configurée pour régler une intensité d'un courant de correction *I*_{c} (30) à travers le second dispositif générateur de champ magnétique (36), sachant que l'unité de correction du champ magnétique (44) est configurée, de plus, pour synchroniser la fréquence et la position de phase du courant de correction *I*_{c} (30) à travers le second dispositif de génération de champ magnétique (36) par rapport au courant d'excitation *I*ₑ (28) à travers le premier dispositif de génération de champ magnétique (16), de préférence pour sélectionner la position de phase 0° ou 180°.

13. Dispositif capteur (10) selon la revendication 12, **caractérisé en ce que**, pour régler un facteur proportionnel *K* du courant de correction *I*_{c} (30) par rapport au courant *I*ₑ (28) sachant que *I*_{c}=*K·I*ₑ, l'unité de correction du champ magnétique (44) prédéfinit un courant de réglage à travers le premier dispositif générateur de champ magnétique (16) et variablement proportionnel à celui-ci à travers le second dispositif générateur de champ magnétique (36) et qu'est sélectionné le facteur proportionnel *K* des amplitudes des courants |*I*_{c}|, |*I*ₑ| pour lequel un signal de sortie d'un dispositif de traitement du signal (46) de l'élément capteur (14) correspond à un signal souhaité pour une mesure dans l'air ou dans une zone sans défaut d'un objet à mesurer (12).

14. Dispositif capteur (10) selon une des revendications précédentes, **caractérisé en ce que** ledit au moins un élément capteur (14), notamment une série de deux éléments capteurs ou plus est disposée sur une carte de circuit imprimé (PCB) (50), notamment sur un bord (52) de la face supérieure d'une PCB (50).

15. Dispositif capteur (10) selon la revendication 14, **caractérisé en ce que** plusieurs éléments capteurs (14) sont disposés dans une forme géométrique de manière complémentaire par rapport à la surface (62) de l'objet à mesurer (12), notamment recourbée de manière concave ou convexe ou dans un tracé de courbure complémentaire à une surface recourbée (62) de l'objet à mesurer (12) sur le bord (52) de la PCB (50).

16. Tête de mesure (60, 70) pour un contrôle non destructif du matériau, **caractérisée en ce que** la tête de mesure (60, 70) comprend un dispositif capteur (10) selon une des revendications précédentes.
